Europäisches Patentamt

European Patent Office

Office européen des brevets

(11) Publication number: **0 078 285**
**B1**

(12) **EUROPEAN PATENT SPECIFICATION**

(45) Date of publication of patent specification: **13.08.86**

(51) Int. Cl.⁴: **A 22 B 7/00,** A 22 C 17/00

(21) Application number: **82901413.3**

(22) Date of filing: **05.05.82**

(86) International application number:
**PCT/DK82/00040**

(87) International publication number:
**WO 82/03748 11.11.82 Gazette 82/27**

(54) PROCEDURE FOR THE CUTTING UP OF TWO HALF CARCASSES OF PIGS.

(30) Priority: **07.05.81 DK 2026/81**

(43) Date of publication of application:
**11.05.83 Bulletin 83/19**

(45) Publication of the grant of the patent:
**13.08.86 Bulletin 86/33**

(84) Designated Contracting States:
**DE FR GB NL SE**

(56) References cited:
**US-A-3 916 484**

(73) Proprietor: **K.J. MASKINFABRIKEN A/S
Hjerting
DK-6700 Esbjerg (DK)**

(72) Inventor: **JEPSEN, Jens Thomsen
Gyvelvej 5 Hjerting
DK-6700 Esbjerg (DK)**
Inventor: **MOGENSEN, Tonny
Skippervaenget 66
DK-6700 Esbjerg (DK)**

(74) Representative: **Koepsell, Helmut, Dipl.-Ing.
Mittelstrasse 7
D-5000 Köln 1 (DE)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a procedure and an apparatus for cutting up two half carcasses of a pig which, by means of conveyors are carried one behind the other and situated horizontally with their longitudinal direction extending across the direction of conveyance towards saws for hind trotter, head, fore-end and ham respectively.

In known devices of this kind all saws are maintained fixed so that there is a necessity for positioning the half carcasses manually relative to the saws which is both time-consuming and straining.

In consequence, it is one object of the invention to improve the procedure by facilitating handling of the half carcasses, especially by avoiding or at least reducing manual labour.

For this purpose the invention is characterized in that while an upstream conveyor is at a standstill with the two half carcasses thereon, an operator moves position plotters into alignment with desired fore-end, hind trotter, head and ham cutting planes of the leading half carcass and that data relating to said positions of the plotters is then fed into control means; that data of the longitudinal displacement of the trailing half carcass as measured across the upstream conveyor in relation to that of the leading half carcass as measured across the upstream conveyor is fed into the control means; that when the conveyors are set in motion the data in said control means serves to:

(a) space three of the saws apart relatively to the remaining and fixedly located saw to define four desired planes of cutting; and

(b) cause an intermediate conveyor on receiving the leading half carcass from the upstream conveyor to be adjusted so that the ham cutting plane or the fore-end cutting plane of the leading half carcass is aligned with said fixedly positioned saw;

that a downstream conveyor then receives the leading half carcass from the intermediate conveyor and carries it past the cutting saws; and

that before the trailing half carcass on the intermediate conveyor is passed to the downstream conveyor the intermediate conveyor is again adjusted so that the ham cutting plane or the fore-end cutting plane of the trailing half carcass is aligned with said fixedly positioned saw.

The invention also relates to a sawing apparatus for carrying out the before described procedure which apparatus comprises a hind trotter saw, a head saw, a fore-end saw and a ham saw and conveyors arranged end to end for conveying the half carcasses with their longitudinal direction extending horizontally across the direction of conveyance towards the saws. This sawing apparatus is characterized in that the fore-end saw or the ham saw is fixedly located whereas the other saws and at least one of the conveyors are adjustable across the direction of conveyance, control means being provided comprising position plotters for designating the position of desired cutting planes for the respective leading half carcass and the longitudinal displacement of the trailing half carcass as measured across the direction of conveyance in relation to that of the leading half carcass, said control means serving to adjust three of the saws relatively to the fixedly located saw to define four desired planes of cutting and to cause an intermediate conveyor on receiving the leading half carcass from the upstream conveyor to be adjusted so that the respective cutting plane of the leading half carcass is aligned with said fixedly positioned saw and that before the trailing half carcass on the intermediate conveyor is passed to the downstream conveyor the intermediate conveyor is again adjusted so that its respective cutting plane is aligned with a said fixedly positioned saw.

Furthermore, the first conveyor can comprise at least three conveyor belts arranged side by side and parallel to each other, contact appliances comprising two vertical contact surfaces arranged perpendicularly to the conveyor belts and movable between a position below the belts and a position above the belts being provided between respective adjacent belts. These contact appliances may also comprise inclined guiding surfaces on which the half carcasses are sliding down towards the vertical contact surfaces.

In the following the invention will be described in detail with reference to the drawing in which

Fig. 1 is a schematical plan view of a sawing apparatus according to the invention,

Fig. 2 is a vertical section of the first or upstream conveyor of the apparatus.

The sawing apparatus comprises a number of conveyors 1, 2 and 3 arranged end to end and on which two half carcasses of pigs can be conveyed laid horizontally with their longitudinal direction extending across the direction of conveyance to a hind-trotter saw 5, a head saw 6, a fore-end saw 7, and a ham saw 8.

The ham saw 8 is fixed in position, while the other saws 5, 6 and 7 are movable across the direction of conveyance 4. Also one of the conveyors 2 positioned before the saws is displaceable across the direction of conveyance 4. These movements are controlled by a control means not shown on the basis of data input coded in by an operator by means of two movable position plotters 9' and 9" positioned at the entry end of the conveyors and arranged movably across said end.

When the two half carcasses are placed on the first or upstream conveyor 1 with their longitudinal direction extending across the direction of conveyance, a so-called marking out will take place, while the conveyor 1 is at a standstill. The operator will move the position plotters 9' and 9" in relation to the leading half carcass. When the position plotters 9' and 9" are aligned with the desired cutting planes of the said leading half carcass, a button is activated, and data referring to the position of the cutting lines is coded into the control means. When the marking out is finished, data of the longitudinal displacement of the trailing half carcass as measured across the upstream conveyor in relation to that of the leading half carcass as measured across the upstream layer is fed into the control means.

Now the half carcasses are moved to conveyor 2 which is displaceable across the direction of conveyance 4. When the half carcasses have passed into this conveyor the latter will be adjusted so that the desired marked-out ham cutting plane of the carcass will be aligned with the fixedly positioned ham saw 8, and the leading half carcass will then be conveyed on toward the following conveyor 3.

When the trailing half carcass reaches the following conveyor 3 the displaceable conveyor 2 is stopped so that only the first mentioned half carcass moves forward to the saws. In the meantime the displaceable saws 5, 6 and 7 have been adjusted by the control means to their respective cutting planes.

On the basis of the coded-in data the displaceable conveyor 2 is moved again so that the ham cutting plane of the trailing half carcass is aligned with the ham saw 8 before the conveyor 2 is restarted for transporting the trailing half carcass toward conveyor 3 and the saws. For the cutting up of the trailing half carcass the saws will remain in the positions in which they were set for cutting up of the leading half carcass.

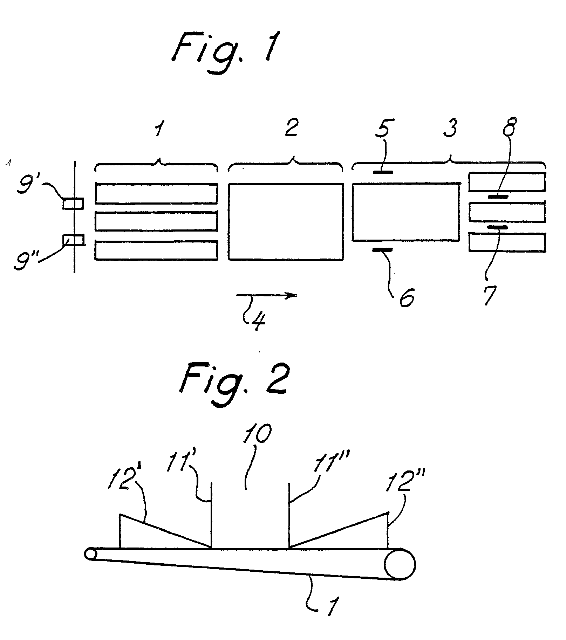

Figure 2 shows a device for ensuring that the longitudinal direction of the half carcasses may be accurately positioned at right angles to the direction of conveyance. The first conveyor 1 consists of at least three conveyor belts arranged side by side and parallel to each other. Contact appliances 10 are inserted in the spaces between two adjacent belts. These contact appliances 10 which can be moved from the position shown in Fig. 2 to a position below the conveyor comprise two vertical contact surfaces 11' and 11" placed perpendicularly to the conveyor belts and two inclined guiding surfaces 12' and 12" on which the half carcasses when lowered from above will slide down towards the contact surfaces 11' and 11" so that the backs of the two half carcasses will remain back to back against the contact surfaces. Before the conveyor 1 is started the contact appliances 10 will be lowered so that the transport can take place unhindered.

It is obvious that the described procedure and the sawing apparatus can be modified in such a way that, for instance, the fore-end saw is stationary so that displaceable conveyor will be adjusted in dependance on the position of the fore-end cutting plane.

**Claims**

1. A procedure for cutting up two half carcasses of a pig which, by means of conveyors (1, 2, 3), are carried one behind the other and situated horizontally with their longitudinal direction extending across the direction of conveyance towards saws (5, 6, 7, 8) for hind trotter, head, fore-end and ham respectively, characterised in that

while an upstream conveyor (1) is at a standstill with the two half carcasses thereon, an operator moves position plotters (9', 9") into alignment with desired fore-end, hind trotter, head and ham cutting planes of the leading half carcass and that data relating to said positions of the plotters is then fed into control means;

that data of the longitudinal displacement of the trailing half carcass as measured across the upstream conveyor (1) in relation to that of the leading half carcass as measured across the upstream conveyor (1) is fed into the control means;

that when the conveyors (1, 2, 3) are set in motion the data in said control means serves to:—

(a) space three of the saws apart relatively to the remaining and fixedly located fore-end saw (7) or ham saw (8) to define four desired planes of cutting; and

(b) cause an intermediate conveyor (2) on receiving the leading half carcass from the upstream conveyor (1) to be adjusted so that the ham cutting plane or the fore-end cutting plane of the leading half carcass is aligned with said fixedly positioned saw (8 or 7);

that a downstream conveyor (3) then receives the leading half carcass from the intermediate conveyor (2) and carries it past the cutting saws (5, 6, 7, 8); and

that before the trailing half carcass on the intermediate conveyor (2) is passed to the downstream conveyor (3) the intermediate conveyor (2) is again adjusted so that the ham cutting plane or the fore-end cutting plane of the trailing half carcass is aligned with said fixedly positioned saw (8 or 7).

2. Sawing apparatus for carrying out the procedure according to claim 1 which apparatus comprises a hind trotter saw (5), a head saw (6), a fore-end saw (7) and a ham saw (8) and conveyors (1, 2, 3) arranged end to end for conveying the half carcasses with their longitudinal direction extending horizontally across the direction of conveyance (4) towards the saws, characterized in that the fore-end saw (7) or the ham saw (8) is fixedly located whereas the other saws and at least one of the conveyors (2) are adjustable across the direction of conveyance (4), control means being provided comprising position plotters (9', 9") for designating the position of desired cutting planes for the respective leading half carcass and the longitudinal displacement of the trailing half carcass as measured across the direction of conveyance (4) in relation to that of the leading half carcass, said control means serving to adjust three of the saws relatively to the fixedly located saw (7 or 8) to define four desired planes of cutting and to cause an intermediate conveyor (2) on receiving the leading half carcass from the upstream conveyor (1) to be adjusted so that the respective cutting plane of the leading half carcass is aligned with said fixedly positioned saw (7 or 8) and that before the trailing half carcass on the intermediate conveyor (2) is passed to the downstream conveyor (3) the intermediate conveyor (2) is again adjusted so that the respective cutting plane of the trailing half carcass is aligned with a said fixedly positioned saw (7 or 8).

3. Sawing apparatus according to claim 2, characterized in that the first conveyor (1) comprises at least three conveyor belts arranged side by side and parallel to each other, contact appliances (10) comprising two vertical contact surfaces (11', 11") arranged perpendicularly to the conveyor belts and movably between a position below the belts and a position above the belts being provided between respective adjacent belts.

4. Sawing apparatus according to claim 3 characterized in that the contact appliances (10) comprise inclined guiding surfaces (12', 12") on which the half carcasses are sliding down towards the vertical contact surfaces (11', 11").

**Patentansprüche**

1. Verfahren zum Auseinanderschneiden zweier Hälften eines Schweines, die durch Fördermittel (1, 2, 3) hintereinander und in horizontaler Lage, bei welcher ihre Längsrichtung quer zur Förderrichtung verläuft, in Richtung auf Sägen (5, 6, 7, 8) jeweils für Hinterlauf, Kopf, Vorderende und Schenkel bewegtwerden, dadurch gekennzeichnet, daß, während ein in Förderrichtung stromaufwärts befindlicher Förderer (1) mit den darauf befindlichen zwei Hälften stillsteht, eine Bedienungsperson Positionsplotter (9', 9") zu den gewünschten Schneidebenen für Vorderende, Hinterlauf, Kopf und Schenkel der vorderen Hälfte ausrichtet und die sich auf diese Positionen beziehende Daten der Plotter dann ineine Steuereinrichtung eingegeben werden;

daß Daten der Längsverschiebung der hinteren Hälfte, gemessen quer zum stromaufwärts befindlichen Förderer (1), in Bezug zu jene der vorderen Hälfte, gemessen quer zum stromaufwärts befindlichen Förderer (1), in die Steuereinrichtung eingegeben werden;

daß, wenn die Förderer (1, 2, 3) in Bewegung gesetzt werden, die Daten in der Steuereinrichtung dazu dienen,

(a) drei der Sägen in Abständen voneinander relativ zur verbleibenden und ortsfest angeordneten Vorderende-Säge (7) oder Schinken-Säge (8) anzuordnen, um vier gewünschte Schneidebenen zu bilden und

(b) die Einstellung eines Zwischenförderers (2) beim Übernehmen der ersten Hälften von dem stromaufwärts befindlichen Förderer (1) so zu bewirken, daß die Schneidebene für den Schinken oder die Schneidebene für das Vorderende der vorderen Hälfte zu der ortsfest angeordneten Säge (8 oder 7) ausgerichtet ist;

daß ein stromabwärts befindlicher Förderer (3) dann die vordere Hälfte vom Zwischenförderer (2) wieder übernimmt und sie an den Schneidsägen (5, 6, 7, 8) vorbeiführt und

daß, bevor die hintere Hälfte auf dem Zwischenförderer (2) an den stromabwärts befindlichen Förderer (3) übergeben wird, der Zwischenförderer (2) wieder eingestellt wird, so daß die Schenken-Schneidebene oder die Vorderende-Schneidebene der hinteren Hälfte zu der ortsfest angeordneten Säge (8 oder 7) ausgerichtet ist.

2. Sägevorrichtung zur Durchführung des Verfahrens gemäß Anspruch 1 mit einer Hinterlauf-Säge (5), einer Kopfsäge (6), einer Vorderende-Säge (7) und einer Schinken-Säge (8) und Förderern (1, 2, 3), die hintereinander angeordnet sind, um die Hälften, deren Längsrichtung sich horizontal quer zur Förderrichtung (4) erstreckt, in Richtung auf die Sägen zu transportieren, dadurch gekennzeichnet, daß die Vorderende-Säge (7) oder die Schinken-Säge (8) ortsfest angebracht ist, wohingegen die anderen Sägen und wenigstens einer der Förderer (2) quer zur Förderrichtung (4) einstellbar und Steuereinrichtungen vorgesehen sind, die Positionsplotter (9', 9") zur Bestimmung der Position der gewünschten Schneidebenen für die jeweils vordere Hälfte und die Längsverschiebung der hinteren Hälfte quer zur Förderrichtung (4) in Bezug auf die vordere Hälfte aufweisen, wobei die Steuereinrichtungen dazu dienen, drei der Sägen relativ zur ortsfesten Säge (7 oder 8) einzustellen, um vier gewünschte Schneidebenen zu erhalten und die Einstellung eines Zwischenförderers (2) bei der Übernahme der vorderen Hälfte vom stromaufwärts befindlichen Förderer (1) zu bewirken derart, daß die jeweilige Schneidebene der vorderen Hälfte zur ortsfesten Säge (7 oder 8) ausgerichtet ist und daß, bevor die hintere Hälfte auf dem Zwischenförderer (2) an den stromabwärts befindlichen Förderer (3) übergeben ist, der Zwischenförderer (2) erneut eingestellt wird, so daß die jeweilige Schneidebene der hinteren Hälfte zu der ortsfest angeordneten Säge (7 oder 8) ausgerichtet ist.

3. Sägevorrichtung nach Anspruch 2, dadurch gekennzeichnet, daß der erste Förderer (1) wenigstens drei nebeneinander und parallel zueinander angeordnete Fördergurte aufweist und Kontakteinrichtungen (10), die zwei vertikale, senkrecht zu den Fördergurten und zwischen einer Position unterhalb der Gurte und einer Position oberhalb der Gurte bewegbar angeordnete Kontaktflächen (11', 11") aufweisen, zwischen jeweils benachbarten Gurten vorgesehen sind.

4. Sägevorrichtung nach Anspruch 3, dadurch gekennzeichnet, daß die Kontakteinrichtungen (10) geneigte Führungsflächen (12', 12") aufweisen, auf denen die Hälften in Richtung auf die vertikalen Kontaktflächen (11', 11") hinuntergleiten.

**Revendications**

1. Méthode pour découper deux moitiés de carcasse d'un porc qui sont transportées au moyen d'installations de transport (1, 2, 3) l'une derrière l'autre et qui sont placées horizontalement avec leur direction longitudinale transversalement à la direction d'acheminement vers des scies (5, 6, 7, 8) pour le pied arrière, la tête, la partie antérieure et le jambon respectivement, caractérisée en ce que pendant l'arrêt de l'installation de transport amont (1) portant les deux moitiés de carcasse, un opérateur déplace des marqueurs de position (9', 9") pour les aligner avec les plans de coupe désirés de la partie antérieure, des pieds arrières, de la tête et du jambon de la moitié antérieure de carcasse et que les données relatives à ces positions des marques sont ensuite transmises dans un moyen de contrôle; que les données du déplacement longitudinal de la moitié arrière de carcasse telles qu'elles sont mesurées à travers de l'installation de transport amont (1) en rapport avec celles de la moitié antérieure de carcasse telles qu'elles sont mesurées à travers le moyen de transport amont (1) sont introduites dans le moyen de contrôle; que, si les installations de transport (1, 2, 3) sont mises en marche, les données dans le moyen de contrôle servent:

(a) à espacer trois des scies par rapport à la scie (7) pour la partie antérieure ou la scie (8) pour le jambon restante et fixe pour définir quatre plans de coupe désirés; et

(b) à faire qu'une installation de transport intermédiaire (2), après réception de la moitié antérieure de carcasse de l'installation de transport amont (1) soit ajustée de sorte que le plan de coupe du jambon ou le plan de coupe de la partie antérieure de la moitié antérieure de carcasse soit aligné avec la scie (8 ou 7) fixe; qu'une installation de transport avale (3) reçoit ensuite la moitié de carcasse antérieure de l'installation de transport intermédiaire (2) et la transporte et la fait défiler devant les scies de découpe (5, 6, 7, 8), et qu'avant le passage de la moitié arrière de carcasse sur l'installation de transport intermédiaire (2) sur l'installation de transport avale (3), l'installation de transport intermédiaire (2) est de nouveau ajustée de sorte que le plan de coupe du jambon ou le plan de coupe de la partie antérieure de la moitié de carcasse arrière soit aligné avec la scie (8 ou 7) fixe.

2. Scie mécanique pour la mise en oeuvre de la méthode selon la revendication 1 qui comprend une scie (5) pour le pied arrière, une scie (6) pour la tête, une scie (7) pour la partie antérieure et une scie (8) pour le jambon et des installations de transport (1, 2, 3) placées l'une derrière l'autre pour transporter des moitiés de carcasse dont la

direction longitudinale s'étend horizontalement à travers la direction de transport (4) vers des scies, caractérisée en ce que la scie (7) pour la partie antérieure ou la scie (8) pour le jambon est fixe, tandis que les autres scies et au moins une des installations de transport (2) sont ajustables à travers de la direction de transport (4), que des moyens de contrôle sont prévus comprenant des marqueurs de position (9', 9") pour désigner la position des plans de coupe désirés pour la moitié antérieure de carcasse respective et le déplacement longitudinal de la moitié de carcasse arrière tel que mesuré à travers la direction de transport (4) par rapport à celui de la moitié antérieure de carcasse, le moyen de contrôle servant à ajuster trois des scies par rapport à la scie fixe (7 ou 8) pour définir quatre plans désirés de coupe et pour faire que l'installation de transport (2) intermédiaire est ajustée après avoir reçue la moitié antérieure de carcasse de l'installation de transport amont (1) de sorte que le plan de coupe respectif de la moitié antérieure de carcasse est aligné avec la scie fixe (7 ou 8) et qu'avant de faire passer la moitié arrière de carcasse sur l'installation de transport intermédiaire (2) sur l'installation de transport avale (3), l'installation de transport intermédiaire (2) est de nouveau ajustée de sorte que le plan de coupe respectif de la moitié arrière de carcasse est aligné avec la scie fixe (7 ou 8).

3. Scie mécanique selon la revendication 2, caractérisé en ce que le premier moyen de transport (1) comprend au moins trois bandes transporteuses arrangées l'une à côté de l'autre et l'une parallèle à l'autre, des dispositifs de contact (10) comprenant deux surfaces de contact (11', 11") verticales disposées perpendiculairement aux bandes transporteuses et mobiles entre une position sous les bandes transporteuses et une position au-dessus des bandes transporteuses, étant prévus entre des bandes transporteuses adjacentes respectives.

4. Scie mécanique selon la revendication 3, caractérisée en ce que les dispositifs de contact (10) comprennent des surfaces de guidage (12', 12") inclinées sur lesquelles les moitiés de carcasse glissent vers le bas vers les surfaces de contact (11', 11") verticales.

0 078 285

Fig. 1

Fig. 2

1